# EUROPEAN PATENT APPLICATION

(11) **EP 4 386 643 A1**
(43) Date of publication of application: **19.06.2024**
(21) Application number: 22212695.5
(22) Date of filing: 12.12.2022
(51) Int. Cl.: G06Q 10/0875, G06Q 10/20, G06Q 50/04

(54) **METHOD FOR COUNTING A VALUE OF A USAGE OF TRAVERSE BAR FOR MOTOR VEHICLES IN A PRODUCTION LINE OF THE MOTOR VEHICLE, COMPUTER PROGRAM PRODUCT, COMPUTER-READABLE STORAGE MEDIUM AS WELL AS PRODUCTION LINE**

(71) Applicant: Bayerische Motoren Werke Aktiengesellschaft, 80809 München (DE)
(72) Inventor: Park, Chulhun, Greer, 29651 (US); Brown, Josh, Greer, 29651 (US); Cooper, Craig, Pelzer, 29669 (US)

(57) **Abstract**

The invention relates to a method for counting a value of a usage of a traverse bar for motor vehicles in a production line (10) of the motor vehicles, comprising the steps of capturing an identification number of the tow bar in a first production device (12) of the production line (10) by a first capturing device (14), wherein in the first production device (12) a first motor vehicle is produced in a first time step, storing a first value for usage in a first local electronic computing device (16) of the first production device (12), capturing the identification number of the tow bar in the first production device (12) and/or in a second production device (18) of the production line (10) by a second capturing device (20), wherein in the first production device (12) and/or the second production device (18) a second motor vehicle is produced in a second time step, storing a second value for usage in the first local electronic computing device (16) and/or a second local electronic computing device (22) of the second production device (18), transmitting the first value and the second value to a central electronic computing device (24) of the production line (10), storing the first value and the second value by the central electronic computing device (24), updating a central usage value for the traverse bar depending on the first value and the second value, and transmitting the updated value to the first local electronic computing device (16) and the second local electronic computing device (22). Furthermore, the invention relates to a computer program product, a computer-readable storage medium as well as a production line (10).

## Description

The invention relates to a method for counting a value of a usage of a traverse bar for motor vehicles in a production line of the motor vehicles. Furthermore, the invention relates to a computer program product, a computer-readable storage medium as well as a production line.

A traverse bar is attached to an underbody of a motor vehicle so it can travel to, for example, paint and assembly until wheels are attached. In order to transport the body, it requires to have two traverse bars, a front bar and a rear bar. Each traverse bar has a unique identification tag. The traverse bar journey is a screwing process to attach the traverse bar to the underbody, travelling through the paint and an unscrewing process to detach the traverse bar.

The traverse bar can be used multiple times, but over time it builds up lots of foreign objects, such as PVC, E-Coat and paint through paint the painting process. Excessive foreign objects impact transport body and they need to proper cleaning after multiple uses. Thus, proper traverse bar counting is crucial for maintenance-cleaning and repair.

Currently, they are systems known, where single input and output, all traverse bars have to go through the same camera system. The system works well as it is easy to count. However, problems occur with traverse bars entering to different production devices and through different capturing device stations. For example, 70% of traverse bars are going to a first production device and 30% are going to a second production device in a random fashion. In addition to this complexity, front bars are common for, for example, different car models and rear bars are, for example, common to do different models.

US 2021/0011944 A1 provides an information providing system providing an information for selecting reference information that is appropriate when a user to perform a task related to a device works on the task, and has an acquiring unit for acquiring acquired data including first image data, in which a specific device and a specific identification label for identifying the specific device are photographed. The system also includes a first database that is built on machine learning, using a data structure for machine learning, which includes a plurality of items of training data that each include evaluation target information including image data, and a meta-ID linked with the evaluation target information. The image data includes an image showing the device and the identification label for identifying the device.

It is an object of the invention to provide a method, a computer program product, computer-readable storage medium as well as a production line, by which counting a value of a usage of a traverse bar is provided in an efficient way.

This object is solved by a method, a computer program product, a computer-readable storage medium as well as a production line according to the independent claims. Advantageous forms of configuration are presented in the dependent claims.

One aspect of the invention relates to a method for counting a value of a usage of a traverse bar for motor vehicles in a production line of the motor vehicles. An identification number of the tow bar is captured in a first production device of the production line by a first capturing device, wherein in the first production device a first motor vehicle is produced in a first time step. A first value for usage is stored in a first local electronic computing device of the first production device. The identification number of the tow bar is captured in the first production device and/or in a second production device of the production line by a second capturing device, wherein in the first production device and/or the second production device a second motor vehicle is produced in a second time step. A second value for usage is stored in the first local electronic computing device and/or a second local electronic computing device of the second production device. The first value and the second value are transmitted to a central electronic computing device of the production line. The first value and the second value are stored by the central electronic computing device. A central usage value for the traverse bar is updated depending on the first value and the second value and the updated value is transmitted to the first local electronic computing device and the second local electronic computing device.

Therefore, using a multi file copy technique is presented, which lasts in a low cost counting system for multiple random input.

The tow bar may also be regarded as a traverse bar.

In other words, the traverse bar is captured in the first production device during a production of the first motor vehicle. A value for the usage is captured by the first capturing device and stored in the first local electronic computing device. This value is transmitted to the central electronic computing device. After that, the same traverse bar may be used in the first production device or the second production device during a production process of a second motor vehicle. Then, the second value is transmitted from the first production device or the second production device, in particular depending on where the motor vehicle is produced, to the central electronic computing device. The central electronic computing device updates the central value, in particular for example, that one more usage in the second production device is performed. After that, the central electronic computing device sends the updated usage value to the first production device and to the second production device. Therefore, the first production device and the second production device have the updated value, and after capturing again the traverse bar, the value is increased by the first production device or the second production device. Therefore, the first production device, the second production device and the central electronic computing device have always the updated value, and it is easy to count the usage of the traverse bar, therefore.

According to an embodiment, at least the local values are updated every 15 minutes. In particular, because the usage of traverse bar is often more than one day, an update every 15 minutes is sufficient to have an actual value in the production devices.

According to another embodiment, after reaching a predefined value of usage the traverse bar is forwarded to a maintenance device of the production line. Therefore, for example, a cleaning or a maintenance of the traverse bar can be provided on the traverse bar. Therefore, a longer life of the traverse bar is provided.

In another embodiment, the first value and/or the second value is stored in a usage list. In particular, the list comprises at least the identification number, a relative usage value according to a reset and an absolute usage value of the traverse bar.

According to another embodiment, the first capturing device and/or the second capturing device is configured as a camera. In particular, the camera may be configured for capturing the identification number.

According to another embodiment, just a part of the identification number is captured and stored. For example, just the last four digits of the identification number or the last five digits of the identification number may be captured and stored. Therefore, the process is very computational efficient.

In another embodiment, the central electronic computing device is configured as a cloud server. Therefore, the counting may be performed in an efficient way.

The method is in particular a computer-implemented method. Therefore, another aspect of the invention relates to a computer program product comprising program code means for performing a method according to the preceding aspect. The computer program product may also be regarded as a so-called computer program.

Another aspect of the invention relates to a computer-readable storage medium comprising a computer program product according to the preceding aspect.

A still further aspect of the invention relates to a production line for motor vehicles, comprising at least a first production device with a first capturing device and a first local electronic computing device, a second production device with a second capturing device and a second local electronic computing device, and a central electronic computing device, wherein the production line is configured for performing a method according to any of the preceding claims. In particular, the method is performed by the production line.

The electronic computing devices may comprise processors, electronic means, integrated circuits, or other electronic means for performing the method.

Advantageous forms of configuration of the method are to be regarded as advantageous forms of the production line. Therefore, the production line may comprise means for performing the method.

Further features of the invention result from the claims, the figures, and the figure description. The features and combinations of features mentioned above in the description, as well as the features and combinations of the features mentioned below in the figure description and/or shown alone in the figures, can be used not only in the combination indicated in each case, but also in any other combinations or on their own.

The invention will now be explained in more detail with reference to a preferred embodiment and with reference to the drawings. Therefore, the drawings show in:
- Fig. 1: a schematic block diagram according to an embodiment of the invention; and
- Fig. 2: a schematic flow chart according to an embodiment of the invention.

In the figures, the same reference signs are indicating the same elements.

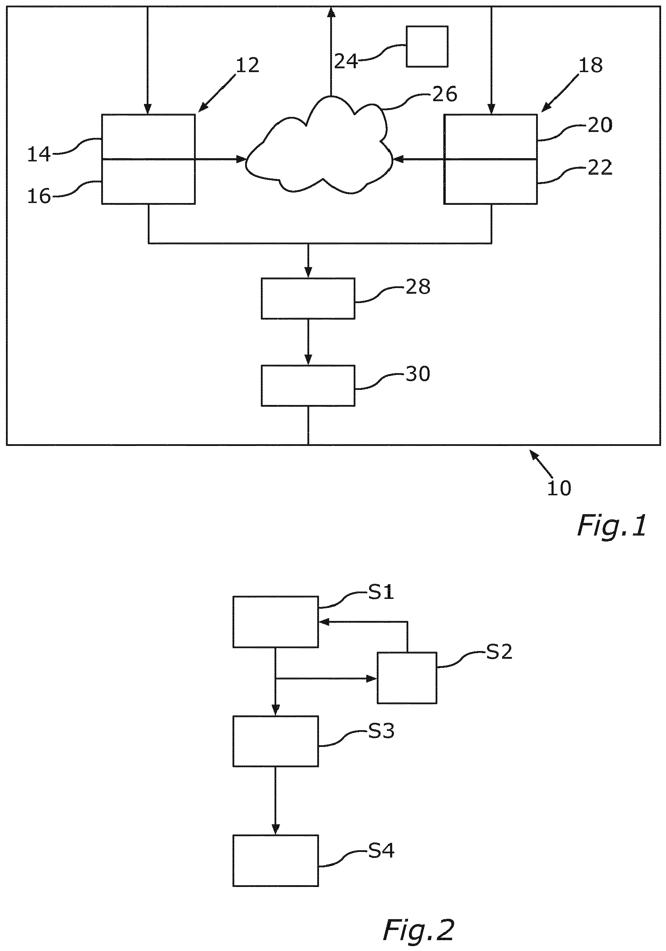

Fig. 1 shows a schematic block diagram according to an embodiment of the invention. In particular, Fig. 1 shows an embodiment of a production line 10 for motor vehicles. The production line 10 comprises at least a first production device 12 with a first capturing device 14 and a first local electronic computing device 16. Furthermore, the production line 10 comprises at least a second production device 18 with a second capturing device 20 and a second local electronic computing device 22. Furthermore, the production line 10 comprises at least a central electronic computing device 24, which is shown as a cloud server.

In particular, Fig. 1 shows that the capturing device 14 is reading a count. If the count for a traverse bar is higher than a threshold, then the traverse bar may be send to a maintenance device 26, may be, for example, for cleaning. Furthermore, if the traverse bar is in the second production device 18, the same method may be provided. If the threshold value is not reached, the traverse bar may be transmitted to a so-called paint shop 28 or to an assembly 30. Coming from the assembly 30, the traverse bar may go back to the first production device 12 and/or the second production device 18.

Fig. 2 shows a schematic flow chart according to an embodiment of the invention. In particular, Fig. 2 shows in a first step S1, if the files from the first production device 12, the second production device 18 as well as the central electronic computing device 24 differ from each other. If not, this is checked in a second step S2 every predefined time frame. If yes, a third step S3 is performed, which synchronizes the files to the cloud. In a fourth step S4, all files, in particular from the first production device 12 and the second production device 18 as well as from the central electronic computing device 24 are synchronized.

The files synchronization happens every 15 minutes but may also be adjusted. The cycle time, in particular from each production device 12, 18 to the assembly 30 is approximately three days. This means, it is impossible that data can be wrong. Once entered, it will never go to other vision systems in 15 minutes.

Therefore, a unique way to count an identification tag of the traverse bar is provided, where reading results are coming from multiple sources. It is not required to have a central data base system that collects all the reading data together and make a decision then send back to local production system. Since all the vision systems are synchronized up without central data base, maintenance decision can be done locally also without investing infrastructure.

Furthermore, disaster recovery is relatively easy. When vision system PCs are replaced in case of failure, once local system is up and running, PCs will have up to date information. The PC may be the first local electronic computing device 16 and/or the second local electronic computing device 22 and/or the central electronic computing device 24.

Therefore, the Fig. 1 and 2 show a method for counting a value of a usage of a traverse bar for motor vehicles in the production line 10. An identification number of the tow bar is captured in the first production device 12 of the production line 10 by the first capturing device 14, wherein in the first production device 12 a first motor vehicle is produced in a first time step. Then, the first value for the usage is stored in the first local electronic computing device 16. The identification number of the tow bar is captured in the first production device 12 and/or the second production device 18 by the second capturing device 20, wherein the first capturing device 12 and/or the second production device 18 a second motor vehicle is produced in a second time step. The second value for the usage is stored in the first local electronic computing device 12 and/or the second local electronic computing device 22. The first value and the second value are transmitted to the central electronic computing device 24, the first value and the second value are stored by the central electronic computing device. A central usage value for the traverse bar is updated depending on the first value or the second value, and the updated value is transmitted to the first local electronic computing device 16 and the second local electronic computing device 22.

The tow bar may also be regarded as a traverse bar.

As already mentioned, at least the local values are updated every 15 minutes. Furthermore, after reaching a predefined value of usage, the traverse bar is forwarded to the maintenance device 26 of the production line 10. The first value and/or second value is stored in a usage list. Furthermore, the first capturing device 14 and/or the second capturing device 20 may be configured as a camera. Furthermore, just a part of the identification number, for example, the last five digits of the identification number, is captured and stored.

### Reference signs

- 10: production line
- 12: first production device
- 14: first capturing device
- 16: first local electronic computing device
- 18: second production device
- 20: second capturing device
- 22: second local electronic computing device
- 24: central electronic computing device
- 26: maintenance device
- 28: paint shop
- 30: assembly
- S1 to S4: steps of the method

## Claims

1. Method for counting a value of a usage of a traverse bar for motor vehicles in a production line (10) of the motor vehicles, comprising the steps of:
- Capturing an identification number of the tow bar in a first production device (12) of the production line (10) by a first capturing device (14), wherein in the first production device (12) a first motor vehicle is produced in a first time step;
- Storing a first value for usage in a first local electronic computing device (16) of the first production device (12);
- Capturing the identification number of the tow bar in the first production device (12) and/or in a second production device (18) of the production line (10) by a second capturing device (20), wherein in the first production device (12) and/or the second production device (18) a second motor vehicle is produced in a second time step;
- Storing a second value for usage in the first local electronic computing device (16) and/or a second local electronic computing device (22) of the second production device (18);
- Transmitting the first value and the second value to a central electronic computing device (24) of the production line (10);
- Storing the first value and the second value by the central electronic computing device (24);
- Updating a central usage value for the traverse bar depending on the first value and the second value; and
- Transmitting the updated value to the first local electronic computing device (16) and the second local electronic computing device (22).

2. Method according to claim 1,
**characterized in that**
at least the local values are updated every 15 minutes.

3. Method according to claim 1 or 2,
**characterized in that**
after reaching a predefined value of usage the traverse bar is forwarded to a maintenance device (26) of the production line (10).

4. Method according to any of claims 1 to 3,
**characterized in that**
the first value and/or the second value is stored in a usage list.

5. Method according to any of claims 1 to 4,
**characterized in that**
the first capturing device (14) and/or the second capturing device (20) is configured as a camera.

6. Method according to any of claims 1 to 5,
**characterized in that**
just a part of the identification number is captured and stored.

7. Method according to any of claims 1 to 6,
**characterized in that**
the central electronic computing device (24) is configured as a cloud server.

8. Computer program product comprising program code means for performing a method according to any of claims 1 to 7.

9. Computer-readable storage medium comprising a computer program product according to claim 8.

10. Production line (10) for motor vehicles, comprising at least a first production device (12) with a first capturing device (14) and a first local electronic computing device (16), a second production device (18) with a second capturing device (20) and a second local electronic computing device (22), and a central electronic computing device (24), wherein the production line (10) is configured for performing a method according to any of claims 1 to 8.
